# EUROPÄISCHE PATENTANMELDUNG

(11) **EP 0 525 898 A2**
(43) Veröffentlichungstag der Anmeldung: **03.02.1993**
(21) Anmeldenummer: 92202296.7
(22) Anmeldetag: 24.07.1992
(51) Int. Cl.: H02M 3/156

(54) **Schaltungsanordnung mit einem Schaltnetzteil**

(30) Priorität: 01.08.1991 DE 4125510
(71) Anmelder: Philips Patentverwaltung GmbH, 22335 Hamburg (DE); Philips Electronics N.V., 5621 BA Eindhoven (NL)
(72) Erfinder: Hüsgen, Theo, c/o Philips Patentverwaltung GmbH, W-2000 Hamburg 1 (DE)
(74) Vertreter: Peters, Carl Heinrich, Dipl.-Ing.

(57) **Zusammenfassung**

Eine Schaltungsanordnung mit einem aus einer Quelle gespeisten und von einer Steuerschaltung gesteuerten Schaltnetzteil, das im Betrieb der Steuerschaltung Energie zuführt, mit einer Starterschaltung zum Zuführen eines Speisestromes an die Steuerschaltung bei Inbetriebnahme, wird dadurch besonders einfach und kostengünstig ausgestaltet, daß die Starterschaltung einen kapazitiven Spannungsteiler umfaßt, der unmittelbar aus der Quelle gespeist werden kann und mit einer Anzapfung versehen ist, der der Speisestrom über ein Gleichrichterelement entnehmbar ist.

## Beschreibung

Die Erfindung bezieht sich auf eine Schaltungsanordnung mit einem aus einer Quelle gespeisten und von einer Steuerschaltung gesteuerten Schaltnetzteil, das im Betrieb der Steuerschaltung Energie zuführt, und mit einer Starterschaltung zum Zuführen eines Speisestromes an die Steuerschaltung bei Inbetriebnahme.

Aus der DE-PS 32 12 147 ist eine Schaltungsanordnung zur Erzeugung einer Gleichspannung aus einer sinusförmigen Eingangsspannung bekannt. Mit dieser Eingangsspannung wird ein Schaltnetzteil und eine dieses in Funktion setzende Steuerschaltung mit Energie gespeist. Die für die Steuerschaltung benötigte Spannung wird dabei im Betrieb durch eine Schaltungsanordnung gewonnen, in der ein Kondensator mit einem ersten Ausgangsanschluß der Quelle gekoppelt und über eine erste Diodenanordnung und das Schaltnetzteil entladbar und in der eine der ersten Diodenanordnung parallel geschaltete Reihenschaltung, die aus einer zweiten Diodenanordnung, über die nur der Ladestrom des Kondensators fließt, und aus wenigstens einer mit einem Anschluß des Schaltnetzteils verbundenen Parallelschaltung aus der Steuerschaltung und einem Glättungskondensator besteht, vorgesehen ist.

Üblicherweise wird das Schaltnetzteil von der Steuerschaltung eingeschaltet, wenn die Spannung an der Steuerschaltung einen Schwellenwert erreicht. Bei Inbetriebnahme der gesamten Schaltungsanordnung kann somit über das Schaltnetzteil zunächst nicht der Entladestrom des Kondensators fließen. Bei der Anordnung nach dem Stand der Technik ist daher eine Starterschaltung vorgesehen, über die solange wenigstens der Entladestrom des Kondensators fließt, bis der Schwellenwert erreicht ist. Wenn das Schaltnetzteil eingeschaltet ist, kann über dieses der Entladestrom fließen.

Bei der aus der DE-PS 32 12 147 bekannten Schaltungsanordnung enthält die Starterschaltung einen Transistor, dessen Kollektor mit dem ersten Anschlußpunkt der Quelle und dessen Emitter mit dem Verbindungspunkt zwischen der zweiten Diodenanordnung und der Parallelschaltung aus der Steuerschaltung und dem Glättungskondensator gekoppelt ist. Über die Kollektor-Emitter-Strecke des Transistors und einen dieser vorgeschalteten Kollektorwiderstand fließt der Entladestrom des Kondensators. Sowohl der Transistor als auch der Kollektorwiderstand sind daher für den Strom zu dimensionieren, mit dem der der Steuerschaltung parallel geschaltete Glättungskondensator aufzuladen und die Steuerschaltung bei Inbetriebnahme zu speisen ist. Darüber hinaus werden diese Elemente im Betrieb mit wenigstens nahezu der Quellenspannung beaufschlagt. Insbesondere bei einer Speisung des Schaltnetzteils aus einem Spannungsversorgungsnetz müssen der Transistor und der Kollektorwiderstand für eine hohe Spannung und verhältnismäßig große Ströme dimensioniert werden. Für Schaltungsbestandteile, die, gemessen an der gesamten Betriebsdauer der Schaltungsanordnung, nur für sehr kurze Zeitabschnitte benötigt werden, ist dies insbesondere bei einem Einsatz in kleinen und billigen Elektrogeräten des Konsumgüterbereichs unwirtschaftlich.

Die Erfindung hat die Aufgabe, eine Starterschaltung derart auszubilden, daß sie einfach und preiswert herstellbar ist.

Diese Aufgabe wird erfindungsgemäß dadurch gelöst, daß die Starterschaltung einen kapazitiven Spannungsteiler umfaßt, der unmittelbar aus der Quelle gespeist werden kann und mit einer Anzapfung versehen ist, der der Speisestrom über ein Gleichrichterelement entnehmbar ist.

Bei der erfindungsgemäßen Schaltungsanordnung werden der hochspannungsfeste und stromfeste Transistor sowie der ebenfalls stromfeste Kollektorwiderstand vermieden. Der statt dessen eingesetzte kapazitive Spannungsteiler arbeitet verlustarm und kann darüber hinaus im Betrieb der Schaltungsanordnung auch als Glättungselement oder Störunterdrückungselement an der Quelle betrieben werden. Durch diese Doppelfunktion wird eine wirtschaftliche Ausnutzung der eingesetzten Bauelemente erreicht. Der von der Anzapfung entnommene Speisestrom steht außerdem bei einer verhältnismäßig geringen Spannung zur Verfügung, so daß das einzusetzende Gleichrichterelement ebenfalls keine hohen Anforderungen bezüglich seiner Spannungsfestigkeit zu erfüllen hat. Die erfindungsgemäße Starterschaltung ist somit einfach und preiswert aufzubauen.

Weitere vorteilhafte Ausgestaltungen der Erfindung sind den Unteransprüchen zu entnehmen und in der Beschreibung zu den Figuren näher erläutert, von denen
Fig. 1 als erstes Ausführungsbeispiel den Einsatz der erfindungsgemäßen Starterschaltung in einem Schaltnetzteil mit Ladekondensator und
Fig. 2 den Einsatz in einem als Hochsetzsteller ausgebildeten Schaltnetzteil zeigt.

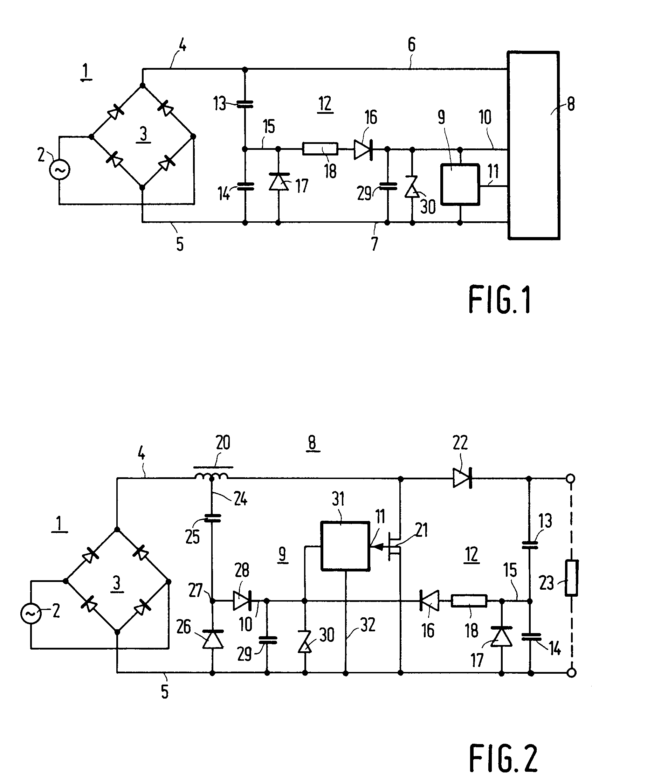

Das erste Ausführungsbeispiel nach Fig. 1 umfaßt eine Quelle 1, bestehend aus einer beispielsweise ein Wechselspannungsnetz repräsentierenden Wechselspannungsquelle 2 und einem Brükkengleichrichter 3. Diese Quelle 1 gibt an zwei Anschlüssen 4, 5 eine pulsierende Gleichspannung ab, durch die Energie über Leitungen 6, 7 in ein Schaltnetzteil 8 eingespeist wird. Das Schaltnetzteil 8 und ein durch dieses gespeister Verbraucher können unterschiedliche, an sich bekannte Konstruktionen aufweisen.

Die Schaltungsanordnung nach Fig. 1 weist weiterhin eine Steuerschaltung 9 auf, die im Betrieb über eine Leitung 10 vom Schaltnetzteil 8 mit Energie versorgt wird. Über eine Steuerleitung 11 wird das Schaltnetzteil von der Steuerschaltung 9 in an sich bekannter Weise gesteuert.

Da bei Inbetriebnahme der Schaltungsanordnung, d.h. beim Einschalten der Quelle 1, das Schaltnetzteil 8 der Steuerschaltung 9 über die Leitung 10 zunächst noch keine Energie zuführt, kann auch die Steuerschaltung 9 ohne zusätzliche Maßnahmen nicht in Betrieb gehen, so daß wiederum auch das Schaltnetzteil 8 nicht in Funktion gebracht werden kann. Bei Inbetriebnahme der Schaltungsanordnung wird daher über eine Starterschaltung 12 die Steuerschaltung 9 während eines Übergangszeitraums mit Energie gespeist, durch die die Funktion der Steuerschaltung 9 solange gewährleistet ist, bis die Energieversorgung über das Schaltnetzteil 8 und die Leitung 10 wirksam ist. Die Starterschaltung 12 umfaßt dazu einen kapazitiven Spannungsteiler aus zwei Kondensatoren 13, 14, deren Kapazitätswerte entsprechend dem Verhältnis zwischen der von der Quelle 1 abgegebenen Spannung und der von der Steuerschaltung 9 benötigten Versorgungsspannung gewählt sind. Der Verbindungspunkt zwischen den Kondensatoren 13, 14 ist als Anzapfung 15 ausgebildet, der ein Speisestrom für die Steuerschaltung 9 über ein Gleichrichterelement 16 entnehmbar ist. Beim Einschalten der Quelle 1 werden die Kondensatoren 13, 14 aufgeladen. Die dabei in den Kondensator 14 fließende Energie steht über das Gleichrichterelement 16 für die Inbetriebnahme der Steuerschaltung 9, beispielsweise zum Anschwingen eines darin enthaltenen Oszillators, zur Verfügung. Die Steuerschaltung 9 ist damit auch ohne vorherige Funktion des Schaltnetzteils 8 in der Lage, dieses über die Steuerleitung 11 derart zu steuern, daß es über die Leitung 10 Energie zu liefern beginnt. Durch die Energie über die Leitung 10 wird dann die weitere Funktion der Steuerschaltung 9 sichergestellt. Ein Glättungskondensator 29 und eine Zenerdiode 30 sind zum Glätten bzw. Begrenzen der der Steuerschaltung 9 zugeführten Versorgungsspannung zwischen den Leitungen 7 und 10 parallel zueinander angeordnet.

Bei der Schaltungsanordnung nach Fig. 1 ist ein zweites Gleichrichterelement 17 in einer zur Polung der Quelle entgegengesetzten Polung zwischen einem Anschluß 5 der Quelle 1 und der Anzapfung 15 angeordnet. Dieses Gleichrichterelement dient insbesondere zur Vermeidung negativer Ladungen auf dem Kondensator 14 beim Abschalten der Quelle 1.

Zur Begrenzung von Einschaltstromstößen wird der Speisestrom von der Anzapfung 15 von der Starterschaltung über eine Begrenzungsimpedanz 18 geführt. Als solche dient im einfachsten Fall ein ohmscher Widerstand, wobei die darin auftretenden Verluste in Kauf genommen werden können, da sie nur kurzzeitig bei Inbetriebnahme der Schaltungsanordnung auftreten.

Der kapazitive Spannungsteiler aus den Kondensatoren 13, 14 dient bei der Schaltungsanordnung nach Fig. 1 gleichzeitig als Ladekondensator für die Gleichspannungsversorgung des Schaltnetzteils 8 durch die Quelle 1. Diese doppelte Ausnutzung der Bauelemente dient einem preiswerten Aufbau der Schaltungsanordnung.

Fig. 2 zeigt ein weiteres Ausführungsbeispiel der Erfindung, bei dem das Schaltnetzteil 8 als Hochsetzsteller ausgebildet ist mit einer Reihenschaltung aus einer Induktivität 20 und einem Schalterelement 21, an dem über ein drittes Gleichrichterelement 22 eine Spannung zum Speisen einer Last abgreifbar ist, die in Fig. 2 schematisch als ohmscher Widerstand 23 dargestellt ist. Dabei ist der kapazitive Spannungsteiler 13, 14 der Starterschaltung 12 parallel zur Last 23 angeordnet. Im übrigen sind die in Fig. 1 bereits dargestellten Schaltungselemente wieder mit identischen Bezugszeichen versehen.

Das als Hochsetzsteller ausgebildete Schaltnetzteil 8 nach Fig. 2 ist außerdem mit einer Speiseschaltung zum Zuführen von Energie zu der Steuerschaltung 9 während des Betriebes versehen, wie sie in wesentlichen Teilen bereits in der deutschen Patentschrift 32 12 147 beschrieben ist. Die mit dem ersten Anschluß 4 der Quelle 1 verbundene Induktivität 20 des Schaltnetzteils 8 weist dazu eine Anzapfung 24 auf, die über einen Kondensator 25 und eine bezüglich der Quelle 1 in Sperrichtung gepolte Diode 26 mit dem zweiten Anschluß 5 der Quelle 1 verbunden ist. Vom Verbindungspunkt 27 zwischen dem Kondensator 25 und der Diode 26 führt eine zweite Diode 28 - in Flußrichtung gepolt - auf die Leitung 10, über die die Steuerschaltung 9 mit Energie aus dem Kondensator 25 im Betrieb gespeist wird. Die in Fig. 1 nur schematisch angedeuteten Stabilisierungselemente für die Speisespannung der Steuerschaltung 9, nämlich ein Glättungskondensator 29 und eine Zenerdiode 30, sind parallel zueinander von der Leitung 10 zum zweiten Anschluß 5 der Quelle 1 geführt. Zu der Steuerschaltung 9 gehört weiterhin die Treiberschaltung 31, die auf der Steuerleitung 11 ein Schaltsignal für das Schalterelement 21 abgibt und über die Leitung 10 sowie eine Verbindung 32 an den zweiten Anschluß 5 der Quelle 1 mit Energie gespeist wird. Zur Speisung der Treiberschaltung 31 mit Energie bei Inbetriebnahme der Schaltungsanordnung ist die Starterschaltung über das Gleichrichterelement 16 ebenfalls an die Leitung 10 angeschlossen.

Bei Inbetriebnahme der Schaltungsanordnung, d.h. beim Einschalten der Quelle 1, fließt bei zunächst noch außer Betrieb befindlicher Treiberschaltung 31 und damit gesperrtem Schalterelement 21 ein Strom durch die Induktivität 20, das dritte Gleichrichterelement 22 und den kapazitiven Spannungsteiler 13, 14. Dadurch wird dessen Kondensator 14 auf eine Anfangsspannung aufgeladen, die ausreicht, über das Gleichrichterelement 16 einerseits den Glättungskondensator 29 aufzuladen und andererseits die Treiberschaltung 31 zum Anschwingen zu bringen. Ist die Treiberschaltung 31 angeschwungen, wird über das Schalterelement 21 und die Induktivität 20 des Schaltnetzteils 8 auch dem Kondensator 25 und damit über die Dioden 26, 28 und den Glättungskondensator 29 letztlich der Treiberschaltung 31 Energie für den weiteren Betrieb zugeführt.

Auch bei dem Ausführungsbeispiel nach Fig. 2 dient der kapazitive Spannungsteiler 13, 14 zum Glätten der der Last 23 zugeführten Spannung, wodurch auch bei dieser Schaltungsanordnung ein wirtschaftlicher Einsatz dieser Schaltungselemente ermöglicht wird.

## Patentansprüche

1. Schaltungsanordnung mit einem aus einer Quelle gespeisten und von einer Steuerschaltung gesteuerten Schaltnetzteil, das im Betrieb der Steuerschaltung Energie zuführt, mit einer Starterschaltung zum Zuführen eines Speisestromes an die Steuerschaltung bei Inbetriebnahme, dadurch gekennzeichnet, daß die Starterschaltung einen kapazitiven Spannungsteiler umfaßt, der unmittelbar aus der Quelle gespeist werden kann und mit einer Anzapfung versehen ist, der der Speisestrom über ein Gleichrichterelement entnehmbar ist.

2. Schaltungsanordnung nach Anspruch 1, dadurch gekennzeichnet, daß ein zweites Gleichrichterelement in einer zur Polung der Quelle entgegengesetzten Polung zwischen einem Anschluß der Quelle und der Anzapfung angeordnet ist.

3. Schaltungsanordnung nach Anspruch 1 oder 2, dadurch gekennzeichnet, daß der Speisestrom von der Starterschaltung über eine Begrenzungsimpedanz geführt wird.

4. Schaltungsanordnung nach Anspruch 1, 2 oder 3, dadurch gekennzeichnet, daß das Schaltnetzteil als Hochsetzsteller ausgebildet ist mit einer Reihenschaltung aus einer Induktivität und einem Schalterelement, an dem über ein drittes Gleichrichterelement eine Spannung zum Speisen einer Last abgreifbar ist, und daß der kapazitive Spannungsteiler parallel zur Last angeordnet ist.
